# EUROPEAN PATENT APPLICATION

(11) **EP 2 367 379 A2**
(43) Date of publication of application: **21.09.2011**
(21) Application number: 11157079.2
(22) Date of filing: 04.03.2011
(51) Int. Cl.: H04W 36/00

(54) **Legacy and advanced access service network internetworking**

(30) Priority: 05.03.2010 US 311174 P; 23.09.2010 US 889285
(71) Applicant: Intel Corporation (INTEL), Santa Clara, CA 95052 (US)
(72) Inventor: Venkatachalam, Muthaiah, Beaverton, Oregon 97006 (US)
(74) Representative: Clarke, Jeffrey

(57) **Abstract**

Embodiments of the present disclosure describe methods, apparatus, and system configurations for transferring wireless connections among legacy and advanced access service networks.

## Description

### Field

Embodiments of the present disclosure generally relate to the field of wireless communication systems, and more particularly, to legacy and advanced access service network internetworking.

### Background

Mobile networks that facilitate transfer of information at broadband rates continue to be developed and deployed. Such networks may be colloquially referred to herein as broadband wireless access (BWA) networks and may include network components operating in conformance with one or more protocols specified by the Worldwide Interoperability for Microwave Access (WiMAX) Forum or the Institute for Electrical and Electronic Engineers (IEEE) 802.16 standards (e.g., IEEE 802.16-2009 Amendment). Updates to these standards/protocols are periodically released. In some instances, complications may arise when transitioning service between access service networks operating in conformance with different releases of these standards/protocols.

### Brief Description of the Drawings

Embodiments will be readily understood by the following detailed description in conjunction with the accompanying drawings. To facilitate this description, like reference numerals designate like structural elements. Embodiments are illustrated by way of example and not by way of limitation in the figures of the accompanying drawings.
**Figure 1** schematically illustrates an example broadband wireless access network architecture in accordance with some embodiments.
**Figure 2** illustrates base station in accordance with some embodiments.
**Figure 3** illustrates a flow diagram for an advanced base station handing over an active wireless connection to a legacy base station in accordance with some embodiments.
**Figure 4** illustrates a message flow between various network components of a handover from a legacy base station to an advanced base station in accordance with various embodiments.
**Figure 5** illustrates a message flow between various network components when a mobile station crosses a cluster boundary while in an idle state in accordance with some embodiments.
**Figure 6** illustrates an example system computing device capable of implementing a communications device in accordance with some embodiments.

### Detailed Description

In the following detailed description, reference is made to the accompanying drawings which form a part hereof wherein like numerals designate like parts throughout, and in which is shown by way of illustration embodiments that may be practiced. It is to be understood that other embodiments may be utilized and structural or logical changes may be made without departing from the scope of the present disclosure. Therefore, the following detailed description is not to be taken in a limiting sense, and the scope of embodiments is defined by the appended claims and their equivalents.

Various operations may be described as multiple discrete actions or operations in turn, in a manner that is most helpful in understanding the claimed subject matter. However, the order of description should not be construed as to imply that these operations are necessarily order dependent. In particular, these operations may not be performed in the order of presentation. Operations described may be performed in a different order than the described embodiment. Various additional operations may be performed and/or described operations may be omitted in additional embodiments.

For the purposes of the present disclosure, the phrase "A and/or B" means (A), (B), or (A and B). For the purposes of the present disclosure, the phrase "A, B, and/or C" means (A), (B), (C), (A and B), (A and C), (B and C), or (A, B and C).

The description may use the phrases "in an embodiment," or "in embodiments," which may each refer to one or more of the same or different embodiments. Furthermore, the terms "comprising," "including," "having," and the like, as used with respect to embodiments of the present disclosure, are synonymous.

As used herein, the term "module" may refer to, be part of, or include an Application Specific Integrated Circuit (ASIC), an electronic circuit, a processor (shared, dedicated, or group) and/or memory (shared, dedicated, or group) that execute one or more software or firmware programs, a combinational logic circuit, and/or other suitable components that provide the described functionality.

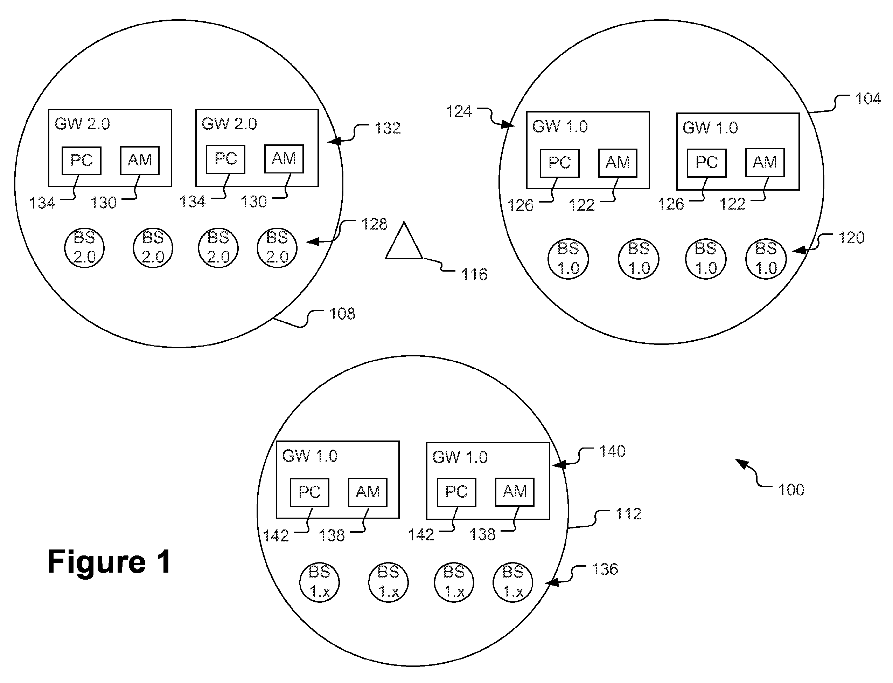

**Figure 1** schematically illustrates an example broadband wireless access (BWA) network **100** in accordance with some embodiments. The BWA network **100** may be a network having access service network (ASN) clusters, such as ASN cluster **104,** ASN cluster **108,** and ASN cluster **112.** Each of the ASN clusters may include one or more base stations (BSs) communicatively coupled to gateways (GWs). The gateways provide the base stations with communicative access to a core network, while the base stations may establish a wireless connection with a mobile station, for example, mobile station **116.** Any gateway of an ASN cluster can connect to any base station in the ASN cluster using an R6-flex interface. The gateways and the base stations may be subject to certain connection rules that govern their interconnections and instruct the availability of advanced and legacy functions as discussed hereinafter.

Each of the gateways may include modules such as a paging controller (PC) and an authentication module (AM), although the paging controller and/or the authentication module, or some components thereof, may be shared among more than one gateway in some embodiments and/or may be located external to the gateway, e.g., in the core network. The authentication modules may be used to authenticate the identity of a mobile station during the establishment of the initial connection or anytime thereafter. In various embodiments the authentication module may also perform other functions such as accounting and authorization. The paging controllers may be used to control traffic flow and location updates when the mobile station is in idle state.

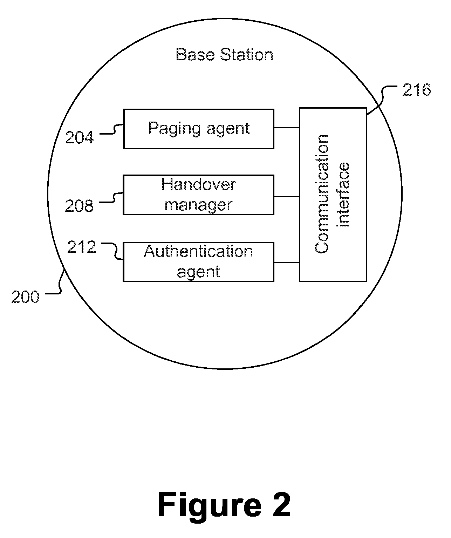

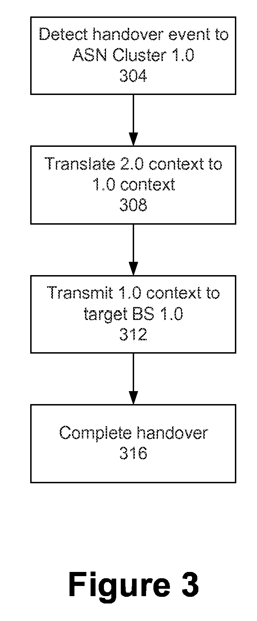

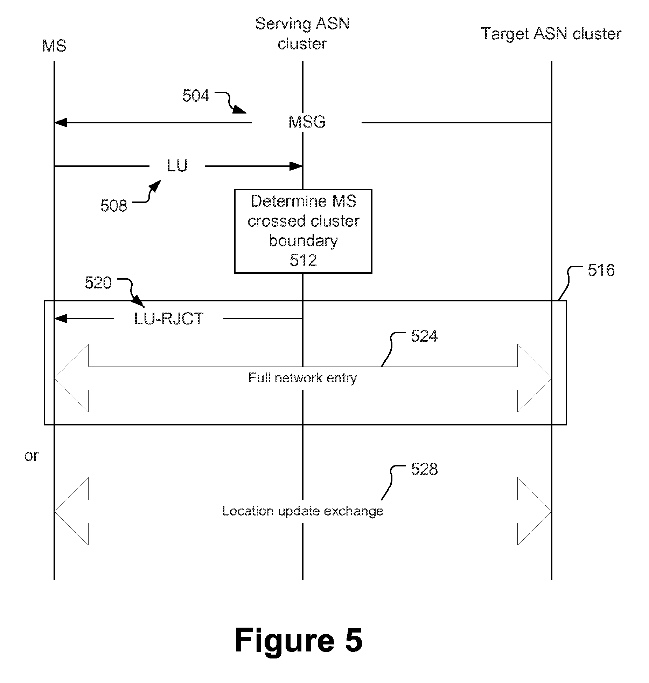

**Figure 2** illustrates a base station **200** in accordance with various embodiments. The base station **200** may include a number of modules designed to perform the operations described herein with respect to either legacy or advanced base stations. The base station **200** may include a paging agent **204** to perform paging operations on behalf of the base station and/or an ASN cluster. Some of these paging operations will be discussed below with respect to **Figure 5****.** The base station **200** may also include a handover manager **208** to perform handover operations on behalf of the base station and/or the ASN cluster. Some of these handover operations may be discussed below with respect to **Figures 3-5**. The base station **200** may also include an authentication agent **212** to perform authentication operations on behalf of the base station and/or the ASN cluster. Some of these handover operations may be discussed below with respect to **Figures 3-5****.** The base station **200** may also include a communication interface **216** coupled to the paging agent **204,** handover manager **208,** and authentication agent **212.** The communication interface **216** may transmit/receive messages from other network components as described herein.

The BWA network **100** of **Figure 1** may include network components that are configured to operate in accordance with different releases of a communication standard/protocol. This may be the result of a staged deployment of the network components. For example, some of the network components may be configured to operate in accordance with the WiMAX Forum Network Architecture, Release 1.0 Version 4, published February 03, 2009 (hereinafter WiMAX Release 1.0), which is based on IEEE 802.16(e)-2005 (hereinafter 802.16(e)). Such network components may be referred to as legacy components and/or be designated with a 1.0. Other network components may be configured to operate in accordance with the WiMAX Release 2.0, which will be based on IEEE 802.16(m), which may be similar to the present draft 802.16m/D8, published August 25, 2010. The WiMAX Release 2.0 provides an advanced air interface that improves security, power saving, and other performance aspects with respect to the WiMAX Release 1.0. Network components configured to operate in accordance with the WiMAX Release 2.0 may also be referred to as advanced components and/or be designated with a 2.0.

The ASN cluster **104** may include legacy base stations, for example, BSs 1.0 **120,** and legacy gateways, for example, GWs 1.0 **124.** The gateways 1.0 **124** may each have an authentication module **122** and paging controller **126.** The connection rules of ASN cluster **104** may provide that connections between BSs 1.0 **120** and GWs 1.0 **124** have a reduced set of functionalities as compared to an ASN cluster 2.0. The ASN cluster **104** may be referred to as an ASN cluster 1.0.

The ASN cluster **108** may include advanced base stations, for example, BSs 2.0 **128,** and advanced gateways, for example, GWs 2.0 **132.** The gateways 2.0 **132** may each have an authentication module **130** and paging controller **134.** The connection rules of the ASN cluster **108** may provide that connections between the BSs 2.0 **128** and the GWs 2.0 **132** have full 802.16(m) functionality. The ASN cluster **108** may be referred to as ASN cluster 2.0.

The ASN cluster **112** may include advanced base stations, for example, BSs 1.x **136,** and legacy gateways, for example, GWs 1.0 **140.** The gateways 1.0 **140** may each have an authentication module **138** and paging controller **142.** The 1.x designation of BSs 1.x **136** indicates that the advanced base station has a reduced set of 802.16m functionalities given the connection with the legacy GWs 1.0 **140.** The connection rules of the ASN cluster **112** may provide that connections between the BSs 1.x 136 and GWs 1.0 140 have a set of functionalities that is greater than a set of functionalities of an ASN cluster 1.0, but less than a set of functionalities of an ASN cluster 2.0. The ASN cluster **112** may be referred to as an ASN cluster 1.x.

As shown, **Figure 1** reflects a connection rule in which each ASN cluster only includes one type of base station, for example, base station 1.0 or base station 2.0 (base station 1.x being an advanced base station coupled with a legacy gateway). Providing this connection rule facilitates migration of mobile station connections among the different base stations of an ASN cluster. However, other embodiments may include a mix of different types of base stations.

As the mobile station **116** moves between advanced and legacy ASN clusters the advanced air interface functionality and wireless connection, which may be active or idle, may be managed as described below with respect to **Figures 3-5****.**

**Figure 3** illustrates a flow diagram for a base station 2.0 handing over an active wireless connection of a mobile station to a base station 1.0 in accordance with some embodiments. At block **304,** a handover manager of a base station 2.0 that is serving a mobile station (hereinafter serving base station 2.0) detects a handover event related to the mobile station. A handover may be initiated by the mobile station, in which case a handover event may be the base station 2.0 receiving a handover request (HO-REQ) from the mobile station. A handover may also be initiated by the handover manager of the base station 2.0, in which case a handover event may be a detected occurrence of one or more predefined trigger conditions relating to, e.g., carrier to interference plus noise ratio (CINR), received signal strength indicator (RSSI), round trip delay (RTD), number of consecutive primary-superframe headers (P-SFHs) missed, relative delay (RD), etc. The handover event may be associated with service of a mobile station's wireless connection being handed off from the serving base station 2.0 to a target base station 1.0.

Connection contexts may be associated with a wireless connection of a mobile station and may include information relating to the wireless connection, e.g., security keys, service flows, etc. Parameters of a connection context 1.0, e.g., tolerable delay, bits per second, etc., may differ from parameters of a connection context 2.0. While a base station 2.0 may be capable of translating parameters of a connection context 1.0 to parameters of a connection context 2.0; a base station 1.0 may not. Accordingly, at block **308**, the handover manager of the serving base station 2.0, upon detection of the handover target being a base station 1.0, may translate parameters of a connection context 2.0 to parameters of a connection context 1.0.

At block **312**, the serving base station 2.0 may transmit the connection context 1.0 to the target base station 1.0. The connection context 1.0 may be transmitted to the target base station 1.0 over an R8 interface, which may be used for transferring control plane packets and, optionally, data packets between base stations to facilitate fast and seamless handovers. In the event that an R8 interface is not present, the mobile station may need to perform a full network entry exchange with the target base station 1.0 rather than a network re-entry exchange. In that event, a connection context 1.0 may be established during the network entry protocol exchange and the connection context translation need not be performed by the handover manager of the serving base station 2.0.

At block **316**, the serving base station 2.0 may complete handover of the active connection to the target base station 1.0. In some embodiments, the handover manager of the serving base station 2.0 may retain the connection context 2.0 in anticipation of a possibility of a reassociation of the wireless connection from the mobile station at a later time. If no reassociation occurs within a predetermined time interval, the connection context may be deleted.

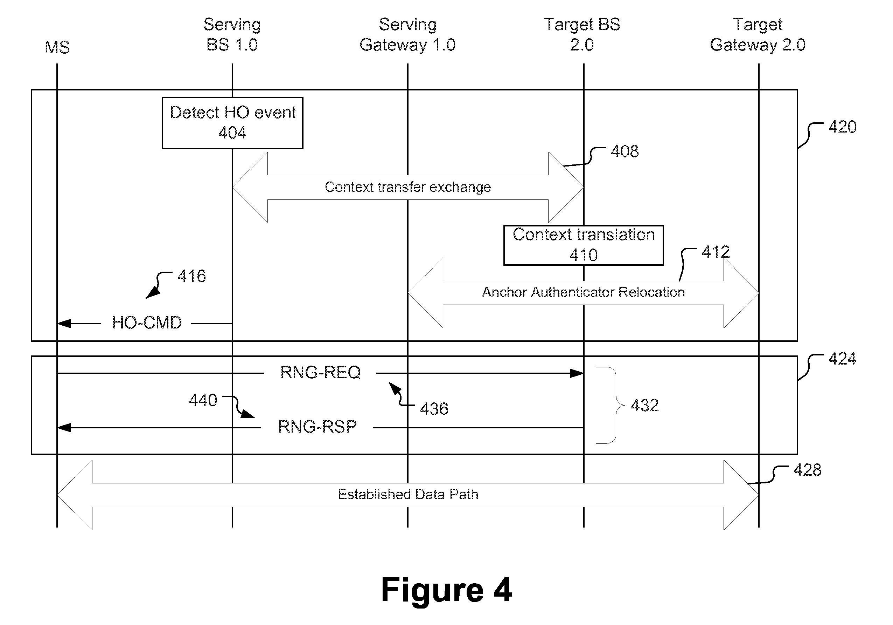

**Figure 4** illustrates a message flow between various network components of a handover from a serving base station 1.0 to a target base station 2.0 in accordance with various embodiments. At block **404**, the serving base station 1.0 may detect a handover event. Detection of the handover event may be similar to detection described above with respect to block **304**.

Subsequent to the detection of the handover event at block **304**, the serving base station 1.0 and the target base station 2.0 may engage in a context transfer exchange **408**, in which the serving base station 1.0 provides a connection context 1.0 to a target base station 2.0. The target base station 2.0, upon receiving the connection context 1.0, may translate the connection context 1.0 to a connection context 2.0 at block **410**.

Similar to the above-described embodiment, the connection context 1.0 may be provided over an R8 interface between the two base stations as part of a network re-entry exchange. In the event that an R8 interface is not available, the mobile station may perform a full network entry exchange with the target base station 2.0. In that event, a connection context 2.0 may be established during the network entry protocol exchange and a translation of the connection context 1.0 need not be performed by the target base station 2.0.

The security and authentication protocols may differ between ASN cluster 1.0 and ASN cluster 2.0. For example, in an ASN cluster 1.0, an authentication module, acting as an anchor authenticator, may receive a mobile station identifier (MSID) as part of an initial key derivation process that derives security keys such as an Authentication Key (AK) and other derivative keys. The MSID includes a media access control (MAC) address that uniquely identifies the mobile station. As this MAC address is sent over the air interface without any encryption before the security keys are established, there may be security compromises. In an ASN cluster 2.0, on the other hand, an authentication module, acting as an anchor authenticator, may implement privacy protection functions. These privacy protection functions provide that a secured hash of the MSID is used in the initial key derivation process. Only after a security association has been established, will the mobile station identify itself by sending its real MSID in an encrypted message. Thus, the mobile station's real MSID is not sent over the air interface in an unencrypted manner, thereby providing privacy protection.

In order to maintain security protections of the ASN cluster 2.0, embodiments of the present disclosure provide that anchor authenticator relocation will be performed whenever a mobile station crosses a cluster boundary that results in a wireless connection being handed over from a base station 1.0 to a base station 2.0. Thus, anchor authenticator relocation **412** may take place between the serving gateway 1.0 and the target gateway 2.0 to relocate the anchor authenticator from an authentication module 1.0 associated with the serving ASN cluster 1.0 to an authentication module 2.0 associated with the target ASN cluster 2.0.

It may be noted that, in some embodiments, anchor authenticator relocation many not be required when a mobile station crosses a cluster boundary that results in a wireless connection being handed over from a base station 2.0 to a base station 1.0, as the authenticator 2.0 may also be capable of implementing 1.0 authentication protocols.

Following the anchor authenticator relocation **412**, the serving base station 1.0 may transmit a handover command (HO-CMD) **416** to the mobile station. The HO-CMD may include instructions for the mobile station to proceed with handover to target ASN cluster. The HO-CMD may include, e.g., an indication of one or more available target base stations, handover procedures, ranging information, expected level of service information, etc.

Block **404**, exchange **408**, block **410**, relocation **412**, and HO-CMD **416** may be considered a handover trigger and execution phase **420**. Following the handover trigger and execution phase **420**, the mobile station may enter a network re-entry phase **424**, which may include a ranging sequence **432** and may result in the establishment of a data path **428** with the target base station 2.0 to transfer the wireless connection and maintain session continuity.

When a wireless connection of mobile station is handed over into the ASN 2.0, various advanced air interface functionalities may be enabled. Some advanced air interface functionalities may include, for example, deregistration content retention (DCR) mode and coverage-loss mechanisms. In DCR mode, the mobile station may deregister from the ASN cluster 2.0 and the ASN cluster 2.0 may retain content, e.g., connection context, for a period of time, determined by a context retention timer. If the mobile station reregisters while the content is still retained by the ASN 2.0 then reregistration will be accelerated. To activate the DCR mode the mobile station uses a context retention identifier (CRID) that the network uses to uniquely identify the mobile station and its context.

Currently, it is contemplated that the CRID will be assigned to the mobile station in an initial registration phase. However, if the mobile station is doing a network re-entry at the target base station 2.0, the mobile station may not perform an initial registration phase with the target base station 2.0. Accordingly, embodiments of the present disclosure provide that a CRID may be assigned in the ranging sequence **432** of the network re-entry phase **424**. The ranging sequence **432** may include a ranging request (RNG-REQ) **436** sent from the mobile station to the target base station 2.0, and a ranging response (RNG-RSP) **440** sent from the target base station 2.0 to the mobile station. The RNG-RSP **440** may include a CRID that is assigned to the mobile station.

The mobile station may subsequently initiate a DCR mode by transmitting a deregistration request (DREG-REQ), if mobile station is initiating DCR mode from connected state, or RNG-REQ, if mobile station is initiating DCR mode from idle state, to the target base station 2.0 that includes the CRID.

When a mobile station is in an idle state, a paging controller stores a connection context of the mobile station and may store downlink messages for the mobile station. During a predefined listening interval, the paging controller may direct a paging agent of the base station to transmit a paging message to alert the mobile station to the presence of stored downlink messages. The mobile station may then exit the idle state and receive the downlink messages. It may be noted that the paging controller may page the mobile station for purposes other than traffic delivery as well.

As previously discussed, a connection context 1.0 may differ from a connection context 2.0. Thus, a mobile station exiting an idle state in an ASN cluster of a different release number than the ASN cluster in which the mobile station entered the idle state, may have difficulty maintaining its wireless connection. This may be especially true if the mobile station has moved from an ASN cluster 2.0 to an ASN cluster 1.0. Accordingly, embodiments of the present invention provide that a paging group does not include a mix of 1.0 and 2.0 components. **Figure 5** describes an idle state transition in light of such provisions.

**Figure 5** illustrates a message flow between various network components when a mobile station crosses a cluster boundary in accordance with some embodiments. In some of these embodiments, the mobile station may be in an idle state when it crosses the cluster boundary.

The mobile station may receive a message (MSG) **504**, from a target ASN cluster, that includes a paging ID. The MSG **504** may be a downlink channel descriptor (DCD) message, a paging message, etc. If the message is a paging message, it may be from a paging controller acting through a paging agent of a base station of the target ASN cluster. It may be understood that actions described as performed by a paging controller may be implemented, at least in part, by a paging agent directed by the paging controller.

The mobile station may determine that the paging ID in the MSG **504** is different from a paging ID of a paging group to which the mobile station is associated. The mobile station may then send a location update (LU) **508** to the serving paging controller. The serving paging controller may then determine that the mobile station has crossed a cluster boundary, which may also be a paging group boundary, at block **512**, at which point the serving paging controller may perform one of two alternatives.

In a first alternative **516**, the serving paging controller may send the mobile station a location update rejection (LU-RJCT) **520**. This may prompt the mobile station to perform a full network entry **524**, including a full network entry protocol exchange, with the target ASN cluster. If the target ASN cluster happens to be an ASN cluster 2.0, then the mobile station will be assigned a CRID upon network entry. Once the network entry is completed, the mobile station may go into an idle state and, at this time, a connection context (either 1.0 or 2.0 depending on the release of the ASN cluster) will be stored in the paging controller of the target ASN cluster. Furthermore, if the target ASN cluster is an ASN cluster 2.0, then the mobile station may also be assigned a deregistration identifier (DID) during the idle state entry. A DID may uniquely identify the mobile station with a paging group ID, a paging cycle, and a paging offset.

In a second alternative, the serving paging controller, the target paging controller, and the mobile station may participate in a location update exchange **528** that includes a paging controller relocation, which relocates a serving PC to a PC of the target ASN cluster. In some embodiments, the location update exchange **528** may only include ranging messages and may omit many of the steps involved in a full network entry protocol exchange, e.g., capability exchange between the MS and BS, registration, authentication, IP address assignment, service flow establishment etc. If the target ASN cluster is an ASN cluster 2.0, the CRID and DID may be assigned to the mobile station as part of the location update exchange **528**.

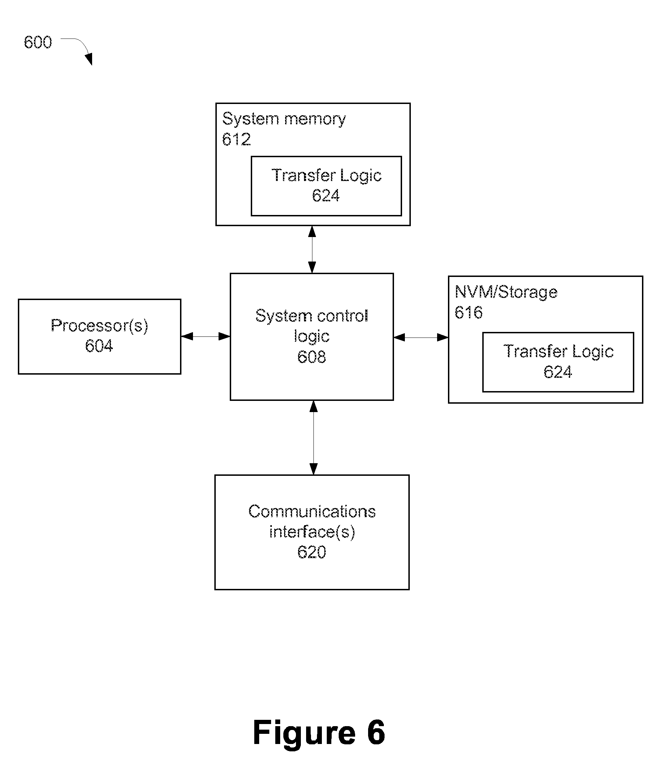

The network components described herein may be implemented into a system using any suitable hardware and/or software to configure as desired. **Figure 6** illustrates, for one embodiment, an example system **600** comprising one or more processor(s) **604,** system control logic **608** coupled to at least one of the processor(s) **604,** system memory **612** coupled to system control logic **608,** non-volatile memory (NVM)/storage **616** coupled to system control logic **608**, and one or more communications interface(s) **620** coupled to system control logic **608**.

System control logic **608** for one embodiment may include any suitable interface controllers to provide for any suitable interface to at least one of the processor(s) **604** and/or to any suitable device or component in communication with system control logic **608.**

System control logic **608** for one embodiment may include one or more memory controller(s) to provide an interface to system memory **612.** System memory **612** may be used to load and store data and/or instructions, for example, for system **600.** System memory **612** for one embodiment may include any suitable volatile memory, such as suitable dynamic random access memory (DRAM), for example.

System control logic **608** for one embodiment may include one or more input/output (I/O) controller(s) to provide an interface to NVM/storage **616** and communications interface(s) **620.**

NVM/storage **616** may be used to store data and/or instructions, for example. NVM/storage **616** may include any suitable non-volatile memory, such as flash memory, for example, and/or may include any suitable non-volatile storage device(s), such as one or more hard disk drive(s) (HDD(s)), one or more compact disc (CD) drive(s), and/or one or more digital versatile disc (DVD) drive(s) for example.

The NVM/storage **616** may include a storage resource physically part of a device on which the system **600** is installed or it may be accessible by, but not necessarily a part of, the device. For example, the NVM/storage **616** may be accessed over a network via the communications interface(s) **620.**

System memory **612** and NVM/storage **616** may include, in particular, temporal and persistent copies of transfer logic **624,** respectively. The transfer logic **624** may include instructions that when executed by at least one of the processor(s) **604** result in the system **600** performing transfer operations that occur as a result of a wireless connection of a mobile station being transferred to a different ASN cluster as described above with respect to a gateway, a base station, or mobile station. In some embodiments, the transfer logic **624** may additionally/alternatively be located in the system control logic **608.**

Communications interface(s) **620,** which may represent communication interface **216,** may provide an interface for system **600** to communicate over one or more network(s) and/or with any other suitable device. Communications interface(s) **620** may include any suitable hardware and/or firmware. Communications interface(s) **620** for one embodiment may include, for example, a network adapter, a wireless network adapter, a telephone modem, and/or a wireless modem. For wireless communications, communications interface(s) **620** for one embodiment may use one or more antennae.

For one embodiment, at least one of the processor(s) **604** may be packaged together with logic for one or more controller(s) of system control logic **608.** For one embodiment, at least one of the processor(s) **604** may be packaged together with logic for one or more controllers of system control logic **608** to form a System in Package (SiP). For one embodiment, at least one of the processor(s) **604** may be integrated on the same die with logic for one or more controller(s) of system control logic **608**. For one embodiment, at least one of the processor(s) **604** may be integrated on the same die with logic for one or more controller(s) of system control logic **608** to form a System on Chip (SoC).

In various embodiments, system **600** may have more or less components, and/or different architectures.

Although certain embodiments have been illustrated and described herein for purposes of description, a wide variety of alternate and/or equivalent embodiments or implementations calculated to achieve the same purposes may be substituted for the embodiments shown and described without departing from the scope of the present disclosure. This application is intended to cover any adaptations or variations of the embodiments discussed herein. Therefore, it is manifestly intended that embodiments described herein be limited only by the claims and the equivalents thereof.

## Claims

1. A method comprising:
receiving, at a first base station from a second base station via an R8 interface, a connection context associated with a wireless connection of a mobile station;
receiving a ranging request from the mobile station; and
transmitting, to the mobile station, a ranging response including a context retention identifier to enable one or more functionalities of a WiMAX Release 2.0 access service network (ASN) cluster.

2. The method of claim 1, further comprising:
enabling a deregistration content retention mode and/or a coverage loss mechanism for the mobile station based on the context retention identifier.

3. The method of claim 1, wherein the first base station is an advanced base station and the second base station is a legacy base station.

4. The method of claim 3, wherein the legacy base station is part of a WiMAX Release 1.0 access service network (ASN) cluster and the advanced base station is part of the WiMAX Release 2.0 ASN cluster.

5. The method of any of claims 1-4, wherein the connection context is a legacy connection context and the method further comprises:
translating parameters of the legacy connection context to parameters of an advanced connection context.

6. The method of claim 5, wherein the legacy connection context is associated with a WiMAX Release 1.0 and the advanced connection context is associated with a WiMAX Release 2.0.

7. An apparatus comprising:
a handover manager configured to:
detect a handover event associated with a wireless connection of a mobile station being handed off from a first access service network (ASN) cluster to a second ASN cluster;
determine the second ASN cluster is a legacy ASN cluster; and
translate an advanced connection context to a legacy connection context based on said determination that the second ASN cluster is a legacy ASN cluster; and
a communication interface coupled to the handover manager and configured to transmit the legacy connection context to the second ASN cluster.

8. The apparatus of claim 7, wherein the communication interface is further configured to
transmit the legacy connection context to the second ASN cluster over an R8 interface.

9. The apparatus of claim 7, wherein the handover manager is configured to translate the advanced connection context to a legacy connection context by being configured to:
translate one or more parameters of the advanced connection context to one or more parameters of the legacy connection context.

10. The apparatus of claim 9, wherein the one or more parameters include tolerable delay or bits per second.

11. The apparatus of claim 7, wherein the handover manager is further configured to
detect the handover event based on a received handover request or an occurrence of a predefined condition relating to carrier to interference plus noise ratio, received signal strength indicator, round trip delay, number of consecutive primary-superframe headers missed, or relative delay.
